# EUROPÄISCHE PATENTSCHRIFT

(11) **EP 3 834 266 B1**
(45) Veröffentlichungstag und Bekanntmachung des Hinweises auf die Patenterteilung: **28.09.2022**
(21) Anmeldenummer: 19765635.8
(22) Anmeldetag: 05.08.2019
(51) Int. Cl.: H02J 3/18

(54) **VERFAHREN ZUM BEREITSTELLEN, TRANSPORTIEREN UND AUFSTELLEN VON SPULEN EINER SPULENBAUGRUPPE**
METHOD FOR SUPPLYING, TRANSPORTING AND INSTALLING COILS OF A COIL ASSEMBLY
PROCÉDÉ DE PRODUCTION, DE TRANSPORT ET DE MISE EN PLACE DE BOBINES D'UN ENSEMBLE DE BOBINES

(30) Priorität: 06.08.2018 AT 506732018
(43) Veröffentlichungstag der Anmeldung: 16.06.2021
(73) Patentinhaber: Coil Holding GmbH, 4070 Eferding (AT)
(72) Erfinder: GRISENTI, Alexander, 4623 Gunskirchen (AT); EDER, Josef, 4150 Rohrbach (AT); FRÖHLICH, Bernhard, 4073 Wilhering (AT); SCHUSTER, Rainer, 4150 Rohrbach-Berg (AT)
(74) Vertreter: Burger, Hannes
(86) Internationale Anmeldenummer: PCT/AT2019/060248
(87) Internationale Veröffentlichungsnummer: WO 2020/028928

(56) Entgegenhaltungen:
- EP-A1- 1 595 809
- WO-A1-00/17084
- WO-A2-2013/102231
- FR-A5- 2 032 237
- GB-A- 1 004 337
- US-A- 6 062 506

## Beschreibung

Die Erfindung betrifft ein Verfahren zum Bereitstellen von Spulen an einem Bereitstellungsort, Transportieren der Spulen vom Bereitstellungsort zu einem Aufstellungsort und Aufstellen der Spulen zu einer Spulenbaugruppe am Aufstellungsort.

Bislang war es bei der Anmelderin üblich, derartige Spulen oder Teilspulen einer Spulenbaugruppe jeweils gesondert und unabhängig voneinander zu transportieren. Damit war ein erhöhter Verpackungsaufwand notwendig sowie ein größerer Transportraum erforderlich.

Die WO 2013/102231 A2 beschreibt den Aufbau und implizit auch ein Verfahren zum Aufbau von zumindest zwei Spulen zu einer Spulenbaugruppe auf einer horizontalen Aufstellfläche, bei der die zweite, kleiner dimensionierte Spule baulich entweder über der ersten Spule angeordnet ist und die zweite obere Spule von der ersten unteren Spule getragen wird, oder die Spulen ineinander angeordnet sind. Durch den viel kompakteren Aufbau einer Spulenbaugruppe, insbesondere in Bezug auf den Platzbedarf in vertikaler Richtung, ist eine Verringerung von Transportkosten erreichbar. Bei der Aufstellfläche handelt es sich jedoch nicht um eine Transportplattform für den Spulentransport zwischen einem Bereitstellungsort und einem Aufstellungsort, sondern um eine Aufstellfläche am Aufstellungsort. Dabei handelt es sich um zueinander unterschiedliche Flächen.

Die EP 1 595 809 A1 offenbart ein Verfahren mit den Schritten Bereitstellen von Spulen an einem Bereitstellungsort, Bereitstellen einer Transportplattform für den Transport der Spulen von einem Bereitstellungsort zu einem Aufstellungsort und Anordnen einer der Spulen auf der Plattform sowie Abstützen derselben auf der Plattform. Weiters ist ein Anordnen der zumindest einen weiteren Spule auf der Plattform und Abstützen derselben auf der Plattform (gestapelt und/oder nebeneinander) mit koaxialer Ausrichtung zu der zuerst angeordneten Spule vorgesehen. Dann erfolgt das Transportieren der auf der Plattform auflagernden Spulen vom Bereitstellungsort zum Aufstellungsort und das Entfernen der Spulen von der Transportplattform. Dabei handelt es sich jeweils um zylindrische Spulen mit Stirnendbereichen, jedoch nicht um Spulen mit Wicklungslagen, wie sie für eine Spulenbaugruppe einzusetzen wären.

Die Außenabmessung der zweiten Spule und die Innenabmessung der ersten Spule sind jedoch so gewählt, dass die zweite Spule nicht innerhalb einer bereits auf der Plattform befindlichen ersten Spule anordenbar ist.

Aufgabe der vorliegenden Erfindung war es, die Nachteile des Standes der Technik zu überwinden und ein Verfahren zur Verfügung zu stellen, mittels dem der Verpackungsaufwand geringer gehalten werden kann und auch die erforderliche Transportfläche minimiert werden kann.

Diese Aufgabe wird durch ein Verfahren gemäß Anspruch 1 gelöst.

Bei dem erfindungsgemäßen Verfahren ist vorgesehen, dass folgende Schritte durchgeführt werden:
- Bereitstellen der ersten Spule mit zumindest einer ersten Wicklungslage, wobei die erste Spule einen ersten Stirnendbereich und einen in Richtung einer ersten Längsachse davon beabstandeten zweiten Stirnendbereich aufweist, und wobei zumindest einer der Stirnendbereiche offen ausgebildet ist und ein freier Kernbereich von der ersten Spule mit einer lichten Innenabmessung mit einem Innendurchmesser, ausgebildet ist,
- Bereitstellen zumindest einer zweiten Spule mit zumindest einer zweiten Wicklungslage, wobei die zweite Spule einen dritten Stirnendbereich und einen in Richtung einer zweiten Längsachse davon beabstandeten vierten Stirnendbereich aufweist und die zweite Spule mit einer Außenabmessung mit einem Außendurchmesser, ausgebildet wird, welche Außenabmessung kleiner ist als die lichte Innenabmessung der ersten Spule,
- Bereitstellen mehrerer erster Stützelemente für die erste Spule und/oder mehrerer zweiter Stützelemente für die zumindest eine zweite Spule,
- Bereitstellen einer Transportplattform für die Spulen,
- Anordnen der ersten Stützelemente und/oder der zweiten Stützelemente vor dem Abstellen der Spulen auf der Transportplattform an zumindest einer der Spulen an deren jeweiligen Stirnendbereich, wobei zumindest eine der Spulen mittels zumindest drei der Stützelemente auf der Transportplattform abstützbar ist,
- Anordnen einer der Spulen auf der Transportplattform und Abstützen derselben auf der sich am Bereitstellungsort befindlichen Transportplattform mit einer lotrechten Ausrichtung von deren Längsachse,
- Anordnen der zumindest einen weiteren der Spulen auf der Transportplattform und Abstützen derselben auf der sich am Bereitstellungsort befindlichen Transportplattformund dabei jeweils die zumindest eine weitere der Spulen in einer in etwa koaxialen Lage bezüglich der bereits auf der Transportplattform befindlichen Spule ausgerichtet wird, und die zumindest eine zweite kleinere Spüle mit ihrer geringen Außenabmessung innerhalb der ersten Spule angeordnet ist, oder Anordnen der zumindest einen weiteren der Spulen innerhalb der bereits auf der Transportplattform befindlichen Spule und Abstützen derselben auf dieser Spule,
- Transportieren der auf der Transportplattform auflagernden Spulen vom Bereitstellungsort zum Aufstellungsort,
- Entfernen der Spulen von der Transportplattform und Aufbau von zumindest zwei der Spulen zur Spulenbaugruppe auf einer eine horizontale Ausrichtung aufweisenden Aufstellfläche und die erste Längsachse der ersten Spule und die zweite Längsachse der zumindest einen zweiten Spule lotrecht ausgerichtet werden.

Durch die maßliche Abstimmung der Spulen zueinander ist die zumindest zweite, kleinere Spule mit ihrer geringeren Außenabmessung bezüglich der kleinsten lichten Innenabmessung der ersten Spule, für den Transport in etwa koaxial innerhalb der ersten Spule angeordnet ist. Damit wird für den Transport einerseits Verpackungsmaterial für die Umverpackung eingespart und darüber hinaus noch der benötigte Stellplatz am Transportmittel verringert. So wird eine kompakte Anordnung der Spulen ineinander für die Durchführung des Transports geschaffen und es ist lediglich eine Umverpackung für die zumindest zwei Spulen bereitzustellen. Es ist dabei lediglich auf die Gesamtmasse der Spulen Bedacht zu nehmen und die Transportplattform in ihrer Ausbildung und Festigkeit darauf abzustimmen. Das gesamte Transportvolumen wird damit verringert, wobei die gesamte Transportmasse durch den Wegfall einer Transportverpackung verringert wird.

Weiters werden mehrere erste Stützelemente für die erste Spule und/oder mehrere zweite Stützelemente für die zumindest eine zweite Spule bereitgestellt. Damit wird die Möglichkeit geschaffen, zumindest eine der Spulen nicht direkt auf der Transportplattform abstellen zu müssen. So werden mögliche Beschädigungen besser vermieden. Weiters werden damit aber Hebevorgänge erleichtert.

Es ist weiters noch vorgesehen, dass die ersten Stützelemente und/oder die zweiten Stützelemente vor dem Abstellen der Spulen auf der Transportplattform an zumindest einer der Spulen angeordnet werden und zumindest eine der Spulen mittels zumindest drei der Stützelemente auf der Transportplattform abgestützt wird. Durch das zusätzliche Vorsehen von eigenen Stützelementen für die erste Spule und/oder auch für die zumindest eine zweite Spule wird zumindest eine der Spulen für sich eigenständig auf der bereitgestellten Transportplattform aufgestellt und daran lastabtragend abgestützt. Durch die gewählte Anzahl von zumindest drei Stützelementen je eigener Spule wird so eine kippfreie und sichere Abstützung von jeder der Spulen an der Transportplattform erreicht.

Eine weitere vorteilhafte Vorgehensweise ist dadurch gekennzeichnet, dass die ersten Stützelemente und die zweiten Stützelemente in Umfangsrichtung um die Längsachsen gesehen zueinander versetzt angeordnet werden. Durch die zueinander versetzte Anordnung der ersten Stützelemente bezüglich der zweiten Stützelemente wird eine Transportanordnung geschaffen, um so bei einem möglichen radialen Überstand der Stützelemente über die jeweilige Spule ein gegenseitiges Kollidieren sicher vermeiden zu können. Die umfängliche Versetzung der ersten und zweiten Stützelemente bezieht sich hier lediglich auf die Zueinander-Anordnung an der Transportplattform. Für den betriebsmäßigen Aufbau am Aufstellungsort sind die ersten und zweiten Stützelemente in radialer Richtung fluchtend zueinander an den jeweiligen Spulen anzuordnen, um so eine gegenseitige Abstützung zwischen den ersten und zweiten Stützelementen aneinander zu ermöglichen.

Weiters ist ein Vorgehen vorteilhaft, bei dem die ersten Stützelemente und/oder die zweiten Stützelemente an der Transportplattform feststehend gehalten werden, insbesondere daran befestigt werden. Durch das feststehende Halten der jeweiligen Stützelemente an der Transportplattform kann ein unbeabsichtigtes Verrutschen jeder der Spulen sicher verhindert werden. Die Befestigung der einzelnen Stützelemente an der Tragplattform kann durch die unterschiedlichsten Schraubverbindungen oder dergleichen erfolgen. Bei gewählten Schraubenverbindungen durchsetzen diese zumindest die Stützelemente und werden entweder direkt mit der Transportplattform verschraubt oder diese durchsetzen auch noch die Transportplattform und es ist eine Schrauben-Muttern-Verbindung vorgesehen.

Eine weitere vorteilhafte Vorgehensweise ist dadurch gekennzeichnet, dass zumindest ein Distanzierungselement, bevorzugt mehrere Distanzierungselemente bereitgestellt werden und das Distanzierungselement oder die Distanzierungselemente in radialer Richtung zwischen der ersten Spule und der zumindest zweiten Spule angeordnet werden. Das Distanzierungselement oder die Distanzierungselemente zwischen der ersten Spule und der zumindest einen zweiten Spule verhindert/verhindern ein gegenseitiges Aneinanderstoßen und erleichtern eine einfachere gegenseitige koaxiale Ausrichtung der Spulen zueinander.

Eine andere Vorgehensweise zeichnet sich dadurch aus, wenn an einem vom ersten Stirnendbereich in Axialrichtung beabstandeten zweiten Stirnendbereich der ersten Spule ebenfalls die ersten Stützelemente angeordnet werden. Damit kann im zweiten Stirnendbereich der ersten Spule eine Abstützbasis für die zumindest eine zweite Spule geschaffen werden, um so die Spulenbaugruppe in Form eines Turmaufbaus übereinander anordnen zu können.

Vorteilhaft ist auch eine Verfahrensvariante, bei welcher der Zusammenbau oder der Aufbau der Spulen zur Spulenbaugruppe in einer turmförmigen Anordnung der Spulen übereinander durchgeführt wird und dabei zuerst die erste Spule am Aufstellungsort aufgebaut und deren erster Stirnendbereich mittels der ersten Stützelemente an der Aufstellfläche abgestützt wird. Damit wird bei Aufbau eine sichere Basis für die Abstützung der zweiten Spule geschaffen. Die ersten Stützelemente können dabei auch noch unter Zwischenschaltung von Isolator-Elementen an der Aufstellfläche abgestützt werden. Dadurch kann eine räumliche Distanzierung der Spulenanordnung von der Aufstellfläche erzielt werden.

Vorteilhaft ist auch eine Verfahrensvariante, bei welcher die Stützelemente gabelförmig ausgebildet sind und jeweils eine Stützelementbasis sowie zumindest einen inneren Stützelementzinken und zumindest einen äußeren Stützelementzinken umfassen, wobei die Stützelementzinken jeweils von der Stützelementbasis aufragen und unter Ausbildung eines Aufnahmeschlitzes voneinander beabstandet angeordnet sind. Durch das gabelförmige Ausbilden der Stützelemente kann so jede Spule, insbesondere eine ausgewählte Wicklungslage derselben, im jeweiligen Aufnahmeschlitz aufgenommen und so in radialer Richtung positioniert gehalten werden. Die Breite des Aufnahmeschlitzes zwischen den Stützelementzinken ist dabei bevorzugt an die jeweilige radiale Dicke der jeweiligen Wicklungslage angepasst, um so einerseits eine sichere Aufnahme und andererseits eine nahezu unverschiebliche Positionierung relativ bezüglich der Transportplattform zu gewährleisten.

Eine andere Vorgehensweise zeichnet sich dadurch aus, wenn die ersten Stützelemente derart an der zumindest einen ersten Wicklungslage der ersten Spule angeordnet werden, dass die zumindest eine erste Wicklungslage im ersten Aufnahmeschlitz aufgenommen wird und sich der zumindest eine innere Stützelementzinken auf der der ersten Längsachse zugewendeten Seite der zumindest einen ersten Wicklungslage befindet und sich der zumindest eine äußere Stützelementzinken auf der von der ersten Längsachse abgewendeten Seite der zumindest einen ersten Wicklungslage befindet und die erste Stützelementbasis auf der Transportplattform aufliegt. Durch die Ausbildung der beidseits vorgesehenen Stützelementzinken sowie der maßlichen Anpassung des zwischen diesen ausgebildeten Aufnahmeschlitzes kann so je nach Passungswahl eine optimale und sichere Positionierung der Spulen sowohl beim Transport als auch am späteren Aufstellungsort erzielt werden.

Weiters ist ein Vorgehen vorteilhaft, bei dem die zweiten Stützelemente derart an der zumindest einen zweiten Wicklungslage der zweiten Spule angeordnet werden, dass die zumindest eine zweite Wicklungslage im zweiten Aufnahmeschlitz aufgenommen wird und sich der zumindest eine innere Stützelementzinken auf der der zweiten Längsachse zugewendeten Seite der zumindest einen zweiten Wicklungslage befindet und sich der zumindest eine äußere Stützelementzinken auf der von der zweiten Längsachse abgewendeten Seite der zumindest einen zweiten Wicklungslage befindet und die zweite Stützelementbasis auf der Transportplattform aufliegt. Damit kann auch die zweite Spule unabhängig von der ersten Spule an der Transportplattform sicher positioniert und gegebenenfalls auch noch ortsfest gehalten werden.

Eine weitere vorteilhafte Vorgehensweise ist dadurch gekennzeichnet, dass die zweiten Stützelemente in einer bezüglich der ersten Stützelemente gleichen Teilung um die zweite Längsachse angeordnet werden. Damit kann eine sichere gegenseitige Abstützung der jeweils einander zugeordneten ersten und zweiten Stützelemente sichergestellt werden.

Eine andere Vorgehensweise zeichnet sich dadurch aus, wenn an den ersten Stützelementen, welche sich im zweiten Stirnendbereich der ersten Spule befinden, jeweils ein Koppelelement befestigt wird, wobei die Koppelelemente in Richtung auf die erste Längsachse ragend angeordnet werden. Es kann aber auch an den zweiten Stützelementen der zweiten Spule jeweils ein Koppelelement befestigt werden, wobei die Koppelelemente auf die von der zweiten Längsachse abgewendet Richtung vorragend angeordnet werden. Durch das Vorsehen von jeweils einem Koppelelement zwischen jedem der ersten Stützelemente und jedem der zweiten Stützelemente kann so trotzdem eine Übereinanderanordnung der Spulen erfolgen. Die Koppelelemente sind insbesondere dann notwendig, wenn die erste und zweite Stützelementbasis in Axialrichtung gesehen in einer nicht einander überdeckenden Lage in radialer Richtung zueinander angeordnet sind. Je nach Montageablauf können die Koppelelemente entweder an den ersten Stützelementen und/oder aber auch an den zweiten Stützelementen der zweiten Spule angeordnet und befestigt werden.

Vorteilhaft ist auch eine Verfahrensvariante, bei welcher die zweite Spule mit den daran befindlichen zweiten Stützelementen unter Zwischenschaltung der jeweiligen Koppelelemente an den ersten Stützelementen abstützend angeordnet wird und jedes der bislang noch nicht mit einem der Stützelemente verbundene Koppelelement mit diesem verbunden wird. Damit wird eine sichere gegenseitige Verbindung der jeweils einander zugewendeten oder zugeordneten und zusammenwirkenden, ersten und zweiten Stützelemente geschaffen.

Eine andere Vorgehensweise zeichnet sich dadurch aus, wenn zumindest einzelne der ersten Stützelemente mit der zumindest einen ersten Wicklungslage der ersten Spule feststehend verbunden werden und/oder zumindest einzelne der zweiten Stützelemente mit der zumindest einen zweiten Wicklungslage der zweiten Spule feststehend verbunden werden. Damit kann ein stabiler und fester Aufbau sowie eine sichere Halterung der einzelnen Stützelemente an der jeweiligen Wicklungslage erzielt werden.

Weiters ist ein Vorgehen vorteilhaft, bei dem die zweite Längsachse der zweiten Spule fluchtend bezüglich der ersten Längsachse der ersten Spule angeordnet wird und die Längsachsen eine gemeinsame Längsmittelachse definieren. Damit kann eine exakte koaxiale Anordnung und zueinander Ausrichtung der Spulen übereinander erzielt werden.

Schließlich ist eine weitere vorteilhafte Vorgehensweise dadurch gekennzeichnet, dass für den Transport der Spulen und/oder beim Zusammenbau oder beim Aufbau der Spulen zur Bildung der Spulenbaugruppe zumindest zwischen einzelnen der ersten Stützelemente und der zumindest einen ersten Wicklungslage und/oder zumindest zwischen einzelnen der zweiten Stützelemente und der zumindest einen zweiten Wicklungslage jeweils Steigungsausgleichselemente angeordnet oder ausgebildet werden. Damit kann trotz des durchgeführten Wickelvorgangs eine sichere und satte Anlage der zumindest einen Wicklungslage am jeweiligen Stützelement sichergestellt werden.

Zum besseren Verständnis der Erfindung wird diese anhand der nachfolgenden Figuren näher erläutert.

Es zeigen jeweils in stark vereinfachter, schematischer Darstellung:
- Fig. 1: eine aus Spulen zu einem Turm zusammengebaute Spulenbaugruppe, in schaubildlicher Darstellung;
- Fig. 2: eine vereinfachte Ausbildung der zu einem Turm zusammengebauten Spulen, in schaubildlicher Darstellung;
- Fig. 3: die erste, untere Spule nach Fig. 2, in schaubildlicher Darstellung;
- Fig. 4: die zweite, obere Spule nach Fig. 2, in schaubildlicher Darstellung mit Ansicht auf die Oberseite;
- Fig. 5: ein Stützelement zur Abstützung von bis zu drei Wicklungslagen einer Spule, in schaubildlicher Darstellung;
- Fig. 6: ein weiteres Stützelement zur Abstützung einer Wicklungslage einer Spule, in schaubildlicher Darstellung;
- Fig. 7: eine Anordnungsmöglichkeit der Spulen auf einer Transportplattform, in schaubildlicher Darstellung;
- Fig. 8: eine weitere mögliche ineinander Anordnung von zwei Spulen auf einer Transportplattform, in schaubildlicher Darstellung sowie teilweise geschnitten.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Der Begriff "insbesondere" wird nachfolgend so verstanden, dass es sich dabei um eine mögliche speziellere Ausbildung oder nähere Spezifizierung eines Gegenstands oder eines Verfahrensschritts handeln kann, aber nicht unbedingt eine zwingende, bevorzugte Ausführungsform desselben oder eine zwingende Vorgehensweise darstellen muss.

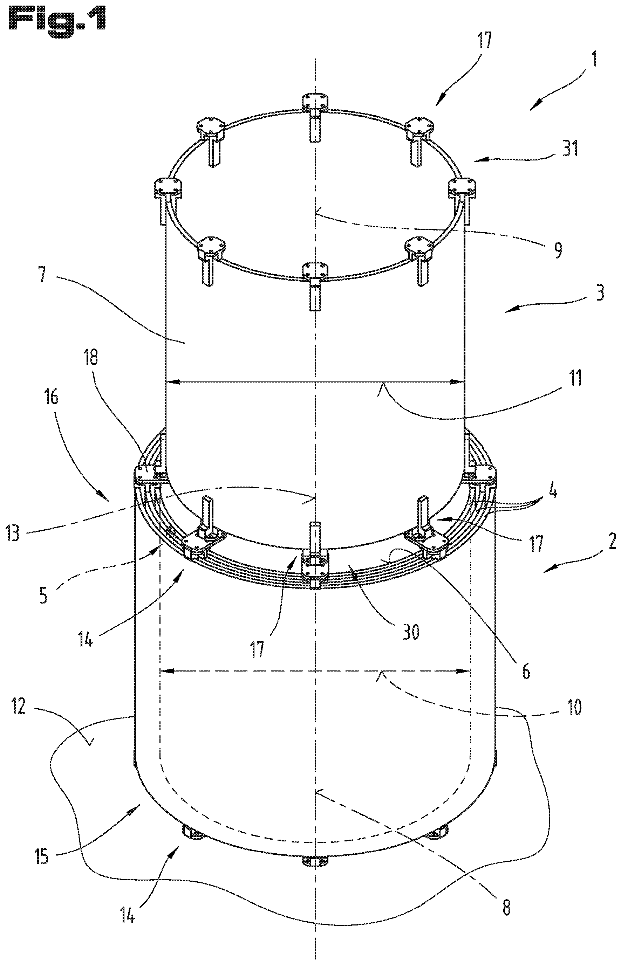

In den Fig. 1 bis 7 ist eine Spulenbaugruppe 1 sowie deren Baukomponenten vereinfacht dargestellt, welche eine erste oder untere bevorzugt sternlose Spule 2 und zumindest eine zweite oder obere Spule 3 umfasst. Es könnten auch mehrere Spulen übereinander zu einem Spulenturm zu der Spulenbaugruppe 1 zusammengestellt werden.

Die Spulen 2, 3 können auch als Drosselspulen, insbesondere als Luftdrosselspulen, bezeichnet werden und weisen zumeist nicht unerhebliche Massen sowie damit verbundene große Abmessungen auf. Derartige Spulen 2, 3 der Spulenbaugruppe 1 weisen bevorzugt keinen Eisenkern auf. Die Spulen 2, 3 finden oder die daraus zusammengestellte Spulenbaugruppe 1 findet überwiegend im Mittel-, Hoch- oder Höchstspannungsbereich Anwendung. Die Spulen 2, 3 bilden zusammen einen Spulenbausatz, welche Spulen gemeinsam entweder die noch nicht zusammengebaute bzw. noch nicht zusammengesetzte Spulenbaugruppe 1 oder die bereits betriebsfertig zusammengesetzte Spulenbaugruppe 1 bilden. Es wäre aber auch unabhängig davon möglich, mit dem nachfolgend beschriebenen Verfahren eine größere erste Spule 2 und zumindest eine dazu kleiner ausgebildete zweite Spule 3 innerhalb der ersten Spule 2 anzuordnen und diese gemeinsam zu transportieren. Diese Spulen 2, 3 können dann jeweils für sich am Aufstellungsort eine eigene, unabhängige Spule der Spulenbaugruppe 1 bilden.

Die erste Spule 2 umfasst zumindest eine erste Wicklungslage 4, wobei die erste Spule 2 aber auch mehrere konzentrisch zueinander angeordnete erste Wicklungslagen 4 umfassen kann. Die Mehrfachanordnung von ersten Wicklungslagen 4 ist in der Fig. 1 angedeutet.

Die erste Wicklungslage 4 oder die einzelnen ersten Wicklungslagen 4 sind bevorzugt jeweils hohlzylindrisch ausgebildet und voneinander beabstandet angeordnet. Sind mehrere erste Wicklungslagen 4 vorgesehen, sind diese bevorzugt elektrisch parallel geschaltet und magnetisch gekoppelt. Weiters sind bei mehreren ersten Wicklungslagen 4 diese zumeist mittels Distanzkörpern 5 auf einem vorbestimmten Abstand zueinander gehalten. Der oder die Distanzkörper 5 können auch als Spaltleisten ausgebildet und als diese bezeichnet werden. In ihrem hohlzylindrisch ausgebildeten Innenraum kann die erste Spule 2 einen überwiegend freien Kernbereich 6 ausbilden.

Es umfasst auch die zweite Spule 3 zumindest eine zweite Wicklungslage 7, welche ebenfalls bevorzugt hohlzylindrisch ausgebildet ist. Es könnten aber auch mehrere konzentrisch zueinander angeordnete zweite Wicklungslagen 7 zur Bildung der zweiten Spule 3 vorgesehen werden. Durch die bevorzugt hohlzylindrische Ausbildung der Spulen 2, 3 oder deren Wicklungslagen 4, 7 wird von der ersten Spule 2 eine erste Längsachse 8 und von der zweiten Spule 3 eine zweite Längsachse 9 definiert. Die Längsachsen 8, 9 können auch als Längsmittelachsen bezeichnet werden.

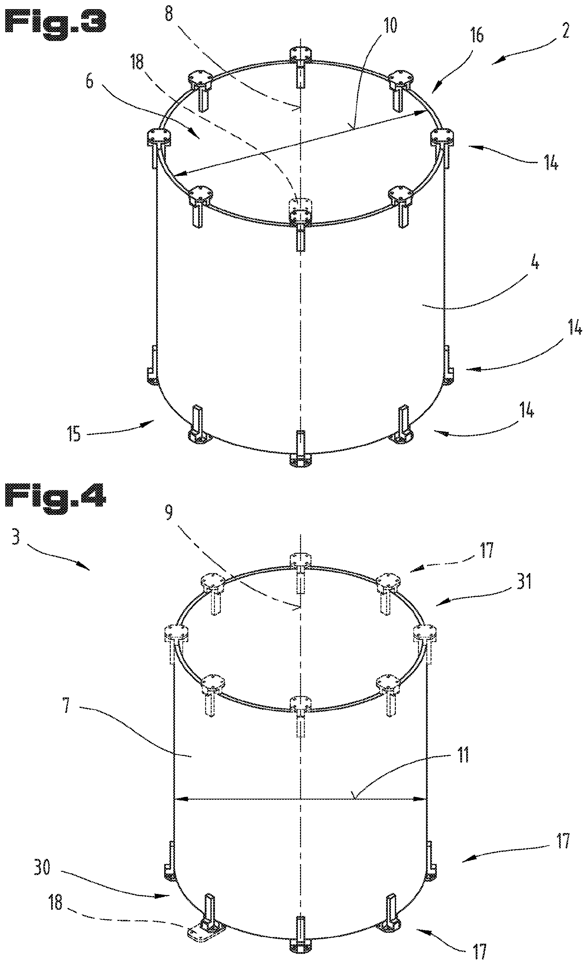

Weiters ist noch vorgesehen, wie dies besser aus den Fig. 3 und 4 zu ersehen ist, dass eine lichte Weite oder eine lichte Innenabmessung 10 der ersten Spule 2, insbesondere deren der ersten Längsachse 8 am nächsten liegende erste Wicklungslage 4, größer gewählt oder ausgebildet ist als eine Außenabmessung 11 der zweiten Spule 3, insbesondere deren am weitesten von der zweiten Längsachse 9 entfernt angeordnete zweite Wicklungslage 7. Durch die hier dargestellten hohlzylindrisch ausgebildeten Wicklungslagen 4, 7 handelt es sich bei den zuvor angeführten Abmessungen um Durchmesser-Abmessungen mit dem jeweiligen Zentrum in einer der Längsachsen 8, 9. Der Abmessungsunterschied zwischen der Außenabmessung 11 (Außendurchmesser) der zweiten Spule 3 und der Innenabmessung 10 (Innendurchmesser) der ersten Spule 2 ist so gewählt, dass die zweite Spule 3 innerhalb der ersten Spule 2 anordenbar ist. Je nach Größe und Abmessung der Spulen 2, 3 kann der Spalt zwischen der zweiten Spule 3 und der ersten Spule 2 einige Millimeter bis hin zu einem Zentimeter oder auch mehreren Zentimetern oder aber bis hin zu mehreren Dezimetern betragen.

Die Spulenbaugruppe 1 wird gefertigt und zumeist entweder direkt vom Werk (Fabrik) oder einem dafür vorgesehenen Lager zum Aufstellungsort transportiert. Der für die Bereitstellung der Spulen 2, 3 vorgesehen Ort wird hier als Bereitstellungsort bezeichnet, an dem auch die Tätigkeiten zur Vorbereitung für das Transportieren und auch die mögliche Verpackung durchgeführt werden. Durch die sternlose oder kernlose Ausbildung zumindest der ersten Spule 2, soll die zweite Spule 3 zumindest für den gemeinsamen Transport der Spulen 2, 3 bis hin zum Aufbau oder Zusammenbau derselben innerhalb der ersten Spule 2 in deren freien Kernbereich 6 aufgenommen werden. Dies wird nachfolgend noch näher beschrieben.

In der fertig aufgestellten und betriebsbereiten Position der Spulenbaugruppe 1, insbesondere zumindest der beiden Spulen 2, 3, kann eine zueinander unterschiedliche Anordnung gewählt werden. Grundsätzlich erfolgt die Aufstellung am Aufstellungsort, der eine überwiegend horizontal ausgerichtete Aufstellfläche 12 aufweist oder ausbildet. Die Aufstellfläche 12 ist bevorzugt durch eine ebene Fläche (Aufstandsebene) gebildet und kann insbesondere durch den Erdboden oder einen Gebäudeboden und/oder ein Fundament realisiert sein. Weiters sollen die beiden Längsachsen 8, 9 bei einer turmförmigen Stapelung der Spulen 2, 3 zueinander bevorzugt fluchtend ausgerichtet sein und eine gemeinsame Längsmittelachse 13 bilden. Zur Abstützung der ersten Spule 2 auf der Aufstellfläche 12 sind vereinfacht dargestellte erste Stützelemente 14 vorgesehen. Je nach Ausbildung der Spule 2 und der Anzahl an ersten Wicklungslagen 4 können die ersten Stützelemente 14 daran angepasst werden. Die ersten Stützelemente 14 sind bevorzugt im Bereich eines ersten Stirnendbereichs 15 und auch eines zweiten Stirnendbereichs 16 der ersten Spule 2 angeordnet. Der erste Stirnendbereich 15 ist der Aufstellfläche 12 zugewendet. Der zweite Stirnendbereich 16 ist dem ersten Stirnendbereich 15 in Axialrichtung gegenüberliegend angeordnet und somit der zweiten Spule 3 zugewendet.

Bei diesem hier gezeigten Ausführungsbeispiel ist vorgesehen, dass die erste Spule 2 auf der Aufstellfläche 12 mittels zumindest drei der ersten Stützelemente 14, gegebenenfalls unter Zwischenschaltung von Isolator-Elementen, abgestützt ist und eine tragende Basis zumindest für die zweite Spule 3 bildet. Die beiden Längsachsen 8, 9 der Spulen 2, 3 weisen im Wesentlichen eine normale Ausrichtung bezüglich der Aufstellfläche 12 auf. Bei einer horizontalen Ausrichtung der Aufstellfläche 12 sind die Längsachsen 8, 9 lotrecht ausgerichtet.

Bei der hier gewählten Anordnung der Spulen 2, 3 übereinander, lagert zumindest die zweite Spule 3 auf der von der Aufstellfläche 12 abgewendeten Seite der ersten Spule 2, nämlich auf dem zweiten Stirnendbereich 16 auf. Damit wird ein turmförmiger Aufbau der Spulenbaugruppe 1 geschaffen. Zur Abstützung der zweiten Spule 3 auf der ersten Spule 2, sind für die zweite Spule 3 zweite Stützelemente 17 vorgesehen.

Zur Überbrückung der jeweiligen radialen Distanz aufgrund der zuvor beschriebenen Abmessungsunterschiede zwischen der ersten Spule 2 und der zweiten Spule 3 ist jeweils zwischen einem ersten Stützelement 14 und einem damit zu koppelnden zweiten Stützelement 17 ein Koppelelement 18 vorgesehen. Das jeweilige Koppelelement 18 ist bevorzugt plattenförmig oder flachprofilförmig ausgebildet.

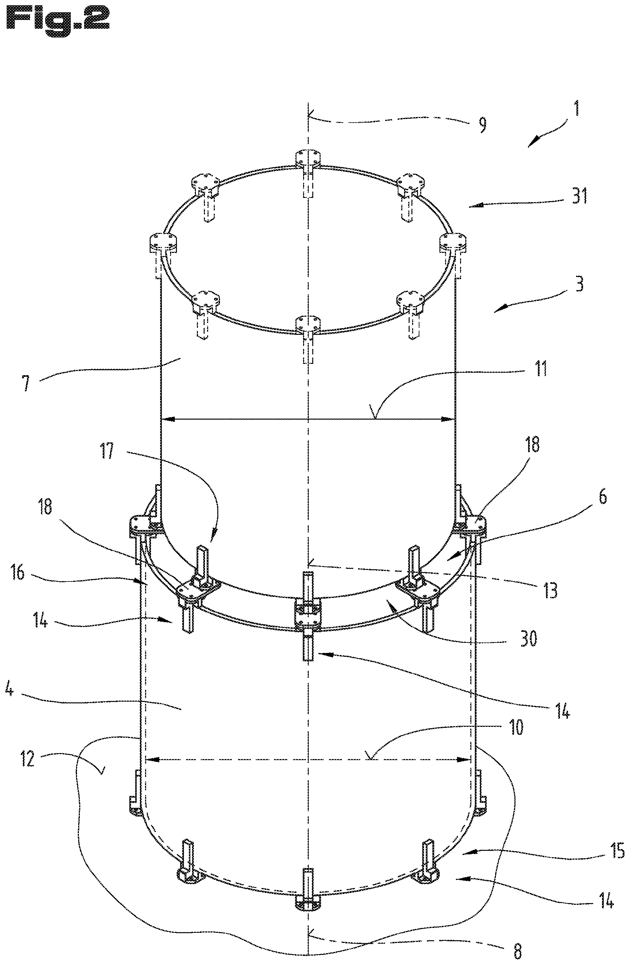

Der Einfachheit und der besseren Übersichtlichkeit halber ist in der Darstellung der Fig. 2 gezeigt, dass jede der Spulen 2, 3 jeweils nur eine Wicklungslage 4, 7 umfasst. Es kann aber jede der Spulen 2, 3 auch mehrere Wicklungslagen 4, 7 umfassen.

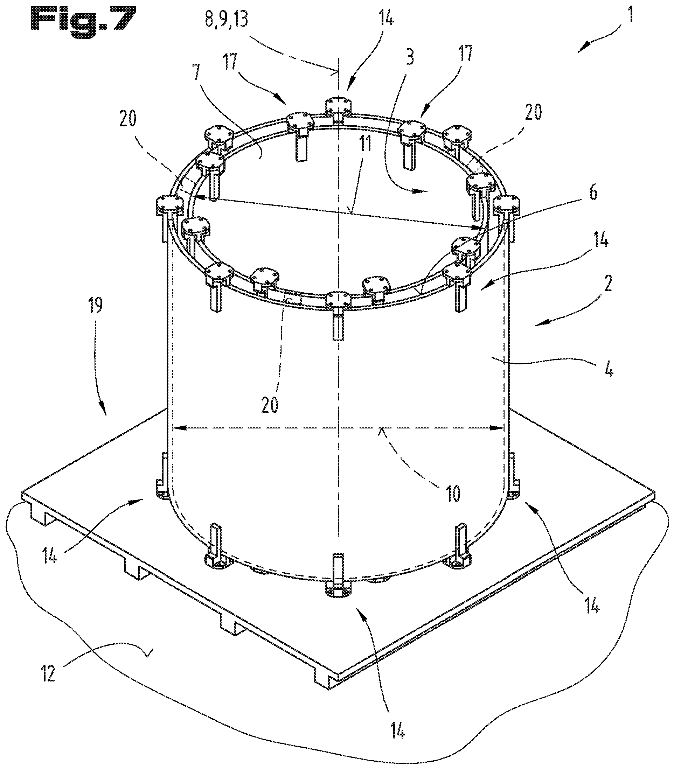

Für den Transport der Spulen 2, 3 vom Bereitstellungsort hin zum Aufstellungsort ist eine Transportplattform 19 vorgesehen, auf welcher die Spulen 2, 3 abgestellt und dann transportiert werden. Die Transportplattform 19 kann beliebigst ausgebildet sein und z.B. in Form einer Platte, einer Palette oder dgl. realisiert sein. Eine mögliche Anordnung ist in der Fig. 7 gezeigt.

Nach dem Abstellen kann auf der Transportplattform 19 zum Schutz der Spulen 2, 3 ein kastenartiger Verschlag angeordnet werden. Zum Abstellen jeder Spule 2, 3 sind die zuvor beschriebenen Stützelemente 14, 17 vorgesehen. Es werden zumindest drei Stück an Stützelementen 14, 17 für jede der Spulen 2, 3 benötigt. Sind alle notwendigen Komponenten bereitgestellt, wird eine der Spulen 2, 3 mit den dazu vorgesehenen Stützelementen 14, 17 auf der Transportplattform 19 abgestellt. Nachfolgend wird die weitere Spule 3, 2 mit den dafür vorgesehenen Stützelementen 17, 14 ebenfalls auf der Transportplattform 19 abgestellt. Es kann entweder zuerst die kleiner ausgebildete zweite Spule 3 und nachfolgend die größere erste Spule 2 abgestellt werden. Unabhängig davon wäre es aber auch möglich zuerst die größere erste Spule 2 und erst dann die kleinere zweite Spule 3 auf der Transportplattform 19 abzustellen.

Vorteilhaft kann es sein, wenn die ersten Stützelemente 14 und die zweiten Stützelemente 17 in Umfangsrichtung um die Längsachsen 8, 9 gesehen zueinander versetzt angeordnet werden. Damit kann der Zugang zu den Stützelementen 14, 17 erleichtert und mögliche gegenseitige Kollisionen vermieden werden.

Die Spulen 2, 3 werden dabei in einer in etwa koaxialen Lage zueinander ausgerichtet und angeordnet, wobei die kleinere zweite Spule 3 innerhalb der ersten Spule 2 angeordnet wird. Dafür ist der freie und kernlose Kernbereich 6 der ersten Spule 2 vorgesehen. Die in etwa koaxiale Ausrichtung ist deshalb gewählt, um gegenseitige Beschädigungen zu vermeiden. Die ersten Stützelemente 14 und/oder die zweiten Stützelemente 17 können nach dem Aufstellen an der Transportplattform 19 feststehend gehalten werden. Dies kann z.B. durch Befestigungsmittel, wie Schrauben, Gewindeelemente oder dergleichen erfolgen. Weiters kann zumindest ein Distanzierungselement 20 vorgesehen und bereitgestellt werden. Bevorzugt werden mehrere Distanzierungselemente 20 bereitgestellt, wobei das Distanzierungselement 20 oder die Distanzierungselemente 20 in radialer Richtung zwischen der ersten Spule 2 und der zumindest zweiten Spule 3 angeordnet werden. Das Distanzierungselement 20 ist in gewissen Grenzen elastisch nachgiebig und kann weiters einen keilförmig ausgebildeten Längsverlauf aufweisen. Der Werkstoff weist bevorzugt elastisch selbstrückstellende Eigenschaften auf, um in seiner Montagestellung in einer vorgespannten Position zwischen den Spulen 2, 3 gehalten zu werden. Bevorzugt erstreckt sich das Distanzierungselement 20 in etwa über die gesamte Bauhöhe der Spulen 2, 3. Die Distanzierungselemente 20 können bei der Wegnahme einer der Spulen 2, 3 von der Transportplattform 19 eine gegenseitige Beschädigung an den einander zugewendeten Seiten oder Flächen der Spulen 2, 3 verhindern.

Ist dies erfolgt, können weitere Schutz- und/oder Verpackungselemente um die Spulen 2, 3 herum angeordnet werden. Ist der zum Transport erforderliche Vorbereitungsvorgang abgeschlossen, stehen die Spulen 2, 3 zum Abtransport und dem damit verbundenen Transport zum Aufstellungsort bereit. Nach dem Transportvorgang und dem Erreichen des Aufstellungsorts werden die Spulen 2, 3 von der Transportplattform 19 entfernt und abgenommen.

Die Spulen 2, 3 können bei einer möglichen Ausführungsform in einem turmartigen Aufbau übereinander am Aufstellungsort auf der bevorzugt eine horizontale Ausrichtung aufweisenden Aufstellfläche 12 angeordnet sein und die Spulenbaugruppe 1 daraus gebildet werden. Die beiden Längsachsen 8 und 9 werden beim turmartigen Aufbau zueinander fluchtend zur Bildung der gemeinsamen Längsmittelachse 13 sowie in einer normalen und somit lotrechten Ausrichtung bezüglich der Aufstellfläche 12 angeordnet.

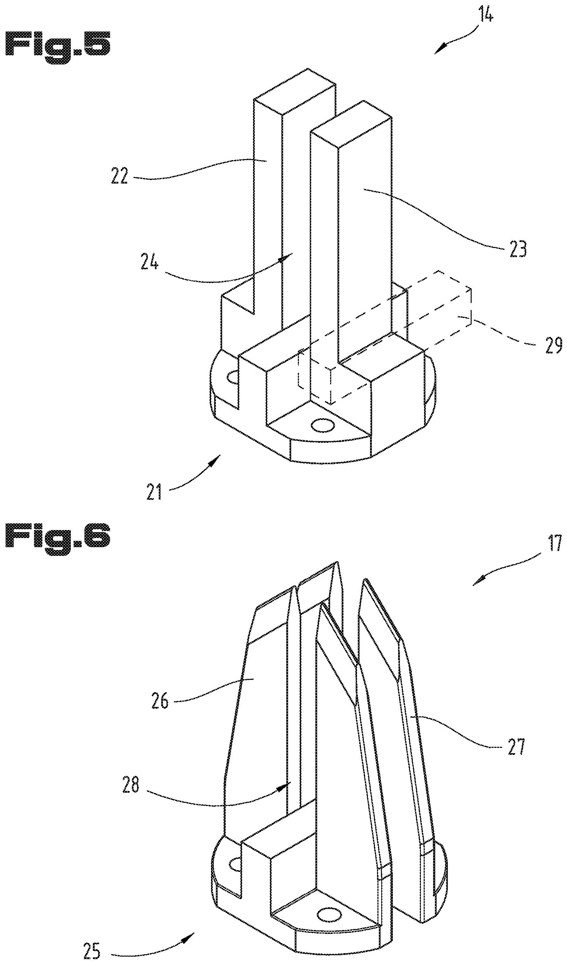

Die zuvor bereits erwähnten Stützelemente 14, 17 sind bevorzugt je nach Ausbildung und Anzahl der Wicklungslagen 4, 7 konstruktiv daran anzupassen. Der Aufbau ist zueinander im Wesentlichen grundsätzlich gleich, wobei nachfolgend nur das erste Stützelement 14 näher beschrieben wird. Die Angaben und die Beschreibung sind analog auf das zweite Stützelement 17 zu übertragen, wobei in der Fig. 5 das erste Stützelement 14 und in der Fig. 6 das zweite Stützelement 17 dargestellt ist. Es könnte das erste Stützelement 14 nicht nur bei der ersten Spule 2 sondern auch bei der zweiten Spule 3 oder aber nur bei der zweiten Spule 3 angeordnet werden. Gleiches kann auch für das zweite Stützelement 17 gelten. Es könnte aber auch das zweite Stützelement 17 nicht nur bei der zweiten Spule 3 sondern auch bei der ersten Spule 2 oder aber nur bei der ersten Spule 2 angeordnet werden.

Das in der Fig. 5 vereinfacht dargestellte erste Stützelement 14 ist gabelförmig ausgebildet und umfasst eine erste Stützelementbasis 21 sowie zumindest einen inneren Stützelementzinken 22 und einen äußeren Stützelementzinken 23. Die ersten Stützelementzinken 22, 23 ragen von der ersten Stützelementbasis 21 auf bzw. stehen von dieser ab. Die Stützelementzinken 22, 23 sind unter Ausbildung eines ersten Aufnahmeschlitzes 24 voneinander beabstandet angeordnet. Die erste Stützelementbasis 21 dient dazu, die erste Spule 2 lastabtragend auf einem Untergrund, nämlich der Aufstellfläche 12 und/oder der Transportplattform 19 abzustützen. Wie bereits zuvor erwähnt, kann das erste Stützelement 14 gegebenenfalls noch mittels eines Isolators am Untergrund abgestützt werden.

Das in der Fig. 6 vereinfacht dargestellte zweite Stützelement 17 ist ebenfalls gabelförmig ausgebildet und umfasst eine zweite Stützelementbasis 25 sowie zumindest einen inneren Stützelementzinken 26 und einen äußeren Stützelementzinken 27. Die zweiten Stützelementzinken 26, 27 ragen von der zweiten Stützelementbasis 25 auf bzw. stehen von dieser ab. Die Stützelementzinken 26, 27 sind ebenfalls unter Ausbildung eines zweiten Aufnahmeschlitzes 28 voneinander beabstandet angeordnet. Die zweite Stützelementbasis 25 kann sich beim Transport auf der Transportplattform 19 abzustützen. Im Aufstellungszustand stützt sich die zweite Stützelementbasis 25 mittels des Koppelelements 18 an der ersten Stützelementbasis 21 des ersten Stützelements 14 ab.

Bevorzugt werden zumindest zum Transportieren der Spulen 2, 3 an jeder derselben die dazu vorgesehenen Stützelemente 14, 17 angeordnet. Die Anordnung kann lose und/oder ortsfest sowie feststehend gewählt werden. Die feststehende Anordnung kann auch als Befestigung bezeichnet werden, wobei dies z.B. im Zuge des Herstellvorgangs mittels des dabei eingesetzten Harzes als Bindemittel erfolgen kann. Vor dem Anordnen und dem möglichen Befestigen der Stützelemente 14, 17 an der jeweiligen Spule 2, 3 können aufgrund des Wickelvorgangs zur Bildung der einzelnen Wicklungslagen 4, 7 Steigungsausgleichselemente 29 zwischen dem jeweiligen Stützelement 14, 17 und der Wicklungslage 4, 7 angeordnet werden, wobei nur eines derselben in der Fig. 5 in strichlierten Linien angedeutet ist. Das oder die Steigungsausgleichselemente 29 können entweder durch einen eigenen Bauteil gebildet sein und/oder aber einen direkten und integralen Bestandteil des oder der Stützelemente 14 und/oder 17 darstellen oder bilden.

Die ersten Stützelemente 14 werden derart an der zumindest einen ersten Wicklungslage 4 der ersten Spule 2 angeordnet, dass die zumindest eine erste Wicklungslage 4 im ersten Aufnahmeschlitz 24 aufgenommen wird. Der zumindest eine innere Stützelementzinken 23 des ersten Stützelements 14 befindet sich auf der der ersten Längsachse 8 zugewendeten Seite der zumindest einen ersten Wicklungslage 4. Der zumindest eine äußere Stützelementzinken 23 des ersten Stützelements 14 befindet sich hingegen auf der von der ersten Längsachse 8 abgewendeten Seite der zumindest einen ersten Wicklungslage 4.

Analog dazu werden die zweiten Stützelemente 17 derart an der zumindest einen zweiten Wicklungslage 7 der zweiten Spule 3 angeordnet, dass die zumindest eine zweite Wicklungslage 7 im zweiten Aufnahmeschlitz 28 aufgenommen wird. Der zumindest eine innere Stützelementzinken 26 des zweiten Stützelements 17 befindet sich auf der der zweiten Längsachse 9 zugewendeten Seite der zumindest einen zweiten Wicklungslage 7. Der zumindest eine äußere Stützelementzinken 27 des zweiten Stützelements 17 befindet sich auf der von der zweiten Längsachse 9 abgewendeten Seite der zumindest einen zweiten Wicklungslage 7.

So ist es möglich, dieselben Stützelemente 14, 17 sowohl zum Transportieren als auch beim Aufstellen und Anordnen der Spulen 2, 3 übereinander zu verwenden. Insbesondere dann, wenn diese feststehend mit der zumindest einen Wicklungslage 4, 7 fest verbunden sind.

Ist der Transport zum Aufstellungsort erfolgt, ist an der dafür vorgesehenen Aufstellfläche 12 der Aufbau und die Endmontage durchzuführen. Dazu ist zuerst die erste Spule 2 gegebenenfalls mit dem oder den Isolatoren zu verbinden und anschließend mittels der ersten Stützelemente 14 an der Aufstellfläche 12 abzustützen. Sind diese bereits vorhanden, erfolgt dies mittels der bereits vorhandenen ersten Stützelemente 14. Es wäre auch möglich, die beim Transport verwendeten ersten Stützelemente 14 nicht für die Endmontage zu verwenden, sondere dafür neue eigene erste Stützelemente 14 einzusetzen. Das Anordnen der ersten Stützelemente 14 an der zumindest einen ersten Wicklungslage 4 der ersten Spule 2 erfolgt analog, wie dies bereits zuvor detailliert beschrieben worden ist.

Um die zumindest eine zweite Spule 3 an der ersten Spule 2 abstützen zu können, sind an dem vom ersten Stirnendbereich 15 in Axialrichtung beabstandeten zweiten Stirnendbereich 16 der ersten Spule 2 ebenfalls die ersten Stützelemente 14 anzuordnen, Dies kann bereits direkt beim Herstellvorgang der ersten Spule 2 oder aber erst im Zuge des Aufbaus und der Montage erfolgen.

Weiters ist das zuvor beschriebene Koppelelement 18 für den turmartigen Aufbau an den ersten Stützelementen 14 und/oder an den zweiten Stützelementen 17 anzuordnen und daran zu befestigen. Dies kann z.B. mittels einer Schraubverbindung, einer Nietverbindung oder einer Klemmverbindung erfolgen. Bei den einander zugewendeten und miteinander zu koppelnden Stützelementen 14, 17 ist bevorzugt nur eines der Koppelelement 18 einzusetzen. Die Anordnung der Koppelelemente 18 erfolgt so, dass diese entweder ausgehend von den ersten Stützelementen 14 in Richtung auf die erste Längsachse 8 ragen oder ausgehend von den zweiten Stützelementen 17 auf die von der zweiten Längsachse 9 abgewendete Seite oder Richtung ragen. Die Koppelelemente 18 sind dabei entweder zuerst mit den ersten Stützelementen 14 oder mit den zweiten Stützelementen 17 zu verbinden.

Sind die zweiten Stützelementen 17 bereits an der zweiten Spule 3 vorhanden, insbesondere daran befestigt, erfolgt die Abstützung an der ersten Spule 2 mittels der bereits vorhandenen zweiten Stützelemente 17. Ist dies nicht der Fall, ist das Anordnen der zweiten Stützelemente 17 an einem dritten Stirnendbereich 30 der zweiten Spule 3 analog durchzuführen, wie dies bereits zuvor detailliert beschrieben worden ist. Der dritte Stirnendbereich 30 ist entweder der Transportplattform 19 oder der ersten Spule 2 zugewendet. Grundsätzlich ist dies stets derselbe Stirnendbereich 30 der zweiten Spule 3.

Sollte oberhalb oder auf der zweiten Spule 3 noch eine nicht dargestellte weitere Spule vorgesehen werden, sind auch in einem vierten Stirnendbereich 31 die zweiten Stützelemente 17 anzuordnen oder anzubringen. Die zweiten Stützelemente 17 im vierten Stirnendbereich 31 könnten aber unabhängig davon zur Befestigung eines Abdeckelements, wie z.B. eines Daches, elektrischer Anschlüsse oder dergleichen, dienen.

Befinden sich die ersten Stützelemente 14, die zweiten Stützelemente 17 und das jeweils dazwischen befindliche Koppelelement 18 in einer zueinander ausgerichteten Position, kann das jeweilige Koppelelement 18 mit dem bis zu diesem Zeitpunkt noch verbundene Stützelement 14 oder 17 verbunden werden. Dazu sind die zweiten Stützelemente 17 in einer bezüglich der ersten Stützelemente 14 gleichen Teilung um die zweite Längsachse 9 anzuordnen oder umgekehrt.

Ist der Ausrichte- und Montagevorgang der Spulen 2, 3 erfolgt, ist die zweite Längsachse 9 der zweiten Spule 3 fluchtend bezüglich der ersten Längsachse 8 der ersten Spule 2 angeordnet. Die Längsachsen 8 und 9 definieren dann die gemeinsame Längsmittelachse 13.

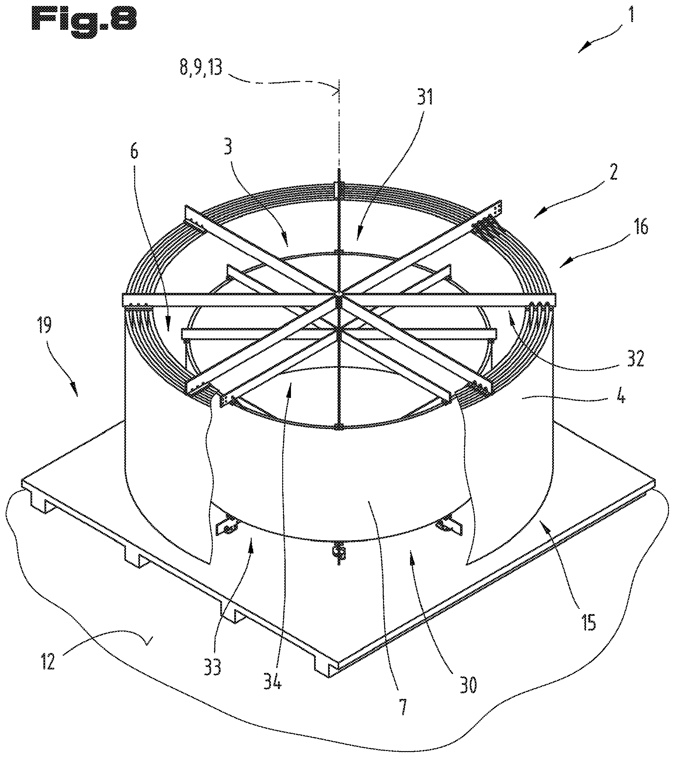

In der Fig. 8 ist eine weitere und gegebenenfalls für sich unabhängige Anordnungsmöglichkeit einer ersten Spule 2 und einer innerhalb dieser aufgenommenen zweiten Spule 3 gezeigt, wobei wiederum für gleiche Teile gleiche Bezugszeichen bzw. Bauteilbezeichnungen wie in den vorangegangenen Fig. 1 bis 7 verwendet werden. Um unnötige Wiederholungen zu vermeiden, wird auf die detaillierte Beschreibung in den vorangegangenen Fig. 1 bis 7 hingewiesen bzw. Bezug genommen.

Bei den hier ineinander angeordneten Spulen 2, 3 wurde auf die unmittelbare Anordnung und das Vorsehen der Stützelemente 14, 17 für das Abstellen auf der Transportplattform 19 verzichtet. Die Stützelemente 14, 17 können jedoch nachträglich noch angebracht und an den Spulen 2, 3 montiert werden. Bei dieser Anordnung ist die äußere, erste Spule 2 mit mehreren ersten Wicklungslagen 4 - nämlich mit vier ersten Wicklungslagen 4 - und die dazu kleinere zweite Spule 3 der Einfachheit halber nur mit einer einzigen zweiten Wicklungslage 7 dargestellt, wobei es auch möglich wäre, mehrere derselben bei der zweiten Spule 3 vorzusehen. Es könnte aber auch jede der Spulen 2, 3 nur eine einzige Wicklungslage 4, 7 umfassen.

Weiters ist noch die Möglichkeit gezeigt, dass die erste, größere Spule 2 an ihrem zweiten Stirnendbereich 16 eine bevorzug sternförmig ausgebildete erste Haltevorrichtung 32 umfassen kann, welche auch als Wicklungsstern bezeichnet werden kann. Um zumindest die zweite Spule 3 in ihrem Kernbereich 6 aufnehmen zu können, ist der erste Stirnendbereich 15 offen und frei auszubilden. Dann ist es möglich, die erste Spule 2 von oben über die bereits auf der Transportplattform 19 abgestellte oder befindliche zweite Spule 3 zu stülpen. In diesem Fall kann die zweite Spule 3 an zumindest ihrem dritten Stirnendbereich 30 eine zweite Haltevorrichtung 33 und/oder auch an ihrem vierten Stirnendbereich 31 eine dritte Haltevorrichtung 34 aufweisen bzw. damit versehen sein. Es sind auch die zweite Haltevorrichtung 33 und auch die dritte Haltevorrichtung 34 jeweils bevorzugt sternförmig ausgebildet und können wiederum als Wicklungssterne bezeichnet werden. Um ein ineinander Anordnen der Spulen 2, 3 zu ermöglichen, soll je nach Ausbildung der Spulen 2, 3, insbesondere bei Spulen mit den zuvor beschriebenen sternförmigen Haltevorrichtungen 32, 33, 34, die Länge oder Höhe der innerhalb angeordneten zweiten kleineren Spule 3 maximal gleich, bevorzugt jedoch geringer gewählt werden als die Länge oder Höhe der außenliegenden ersten Spule 2.

Es haben sich dabei Längen oder Höhen der innerhalb angeordneten Spule 3 von in etwa 50% bis hin zu 100%, bevorzugt von in etwa 70% bis 90%, der Länge oder Höhe der außenliegenden Spule 2 als günstig erwiesen. Wenn bei der äußeren ersten Spule 2 die in der Fig. 8 gezeigte erste Haltevorrichtung 32 (Wicklungsstern) an dem von der Transportplattform 19 abgewendeten zweiten Stirnendbereich 16 angeordnet ist, kann die Gesamthöhe der zweiten Spule 3 maximal 100% der Länge oder Höhe der außenliegenden Spule 2, bevorzugt jedoch etwas kleiner, betragen.

Ist bei der ersten äußeren Spule 2 die erste Haltevorrichtung 32 (Wicklungsstern) hingegen an dem der Transportplattform 19 zugewendeten ersten Stirnendbereich 15 angeordnet oder ist überhaupt keine erste Haltevorrichtung 32 (kein Wicklungsstern) vorgesehen - wie in den Fig. 1 bis 7 beschrieben, kann die Länge oder Höhe der innerhalb angeordneten zweiten Spule 3 ausgehend von 50% bis hin zu 150% bezüglich der ersten Spule 2 betragen. Es wäre aber auch noch möglich, bei der ersten Spule 2 die erste Haltevorrichtung 32 am zweiten Stirnendbereich 16 anzuordnen und für den Transport die erste Spule 2 mittels der ersten Haltevorrichtung 32 in einer Überkopfstellung an der Transportplattform 19 abzustützen. In diesem Fall wäre dann der von der Transportplattform 19 abgewendete erste Stirnendbereich 15 offen ausgebildet und es kann die zweite Spule 3 von oben in den offenen Kernbereich 6 der ersten Spule 2 eingesetzt und in dieser aufgenommen werden.

Damit können auch Spulen 2, 3 mit maximal drei Wicklungssternen oder Haltevorrichtungen 32, 33, 34 ineinander transportiert werden, allerdings nur dann, wenn die Höhenabmessungen aufeinander abgestimmt sind oder die erste Haltevorrichtung 32 (Wicklungsstern) der ersten Spule 2 untenliegend angeordnet ist und die zweite Spule 3 mit oder ohne ihre sternförmigen Haltevorrichtungen 33, 34 an der ersten Haltevorrichtung 32 der ersten Spule 2 auflagert. In diesem Fall ist die zweite Spule 3 indirekt und nicht unmittelbar und nicht direkt auf der Transportplattform 19 abgestützt. Unabhängig davon könnte aber auch hier die erste größere Spule 2 an ihrem ersten, offenen Stirnendbereich 15 mit den ersten Stützelementen 14 zumindest für den Transport an der Transportplattform 19 abgestützt werden. Es wäre auch noch möglich, die ersten Stützelemente 14 auch feststehend und fix im Bereich des ersten Stirnendbereichs 15 anzubringen.

Es wäre auch noch möglich, die in der Fig. 8 gezeigten Spulen 2, 3 entweder in einer turmförmigen Anordnung übereinander anzuordnen oder aber auch die Spulen 2, 3 nebeneinander zu der Spulenbaugruppe 1 aufzustellen.

Abschließend sei noch erwähnt, dass die einzelnen Verfahrensschritte und deren zeitliche Abfolge nicht zwingend in der angeführten Reihenfolge erfolgen muss, sondern auch eine davon abweichende zeitliche Abfolge möglich ist.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

**Bezugszeichenaufstellung**

| | | | |
|---|---|---|---|
| 1 | Spulenbaugruppe | 31 | vierter Stirnendbereich |
| 2 | erste Spule | 32 | erste Haltevorrichtung |
| 3 | zweite Spule | 33 | zweite Haltevorrichtung |
| 4 | erste Wicklungslage | 34 | dritte Haltevorrichtung |
| 5 | Distanzkörper | | |
| 6 | Kernbereich | | |
| 7 | zweite Wicklungslage | | |
| 8 | erste Längsachse | | |
| 9 | zweite Längsachse | | |
| 10 | Innenabmessung | | |
| 11 | Außenabmessung | | |
| 12 | Aufstellfläche | | |
| 13 | Längsmittelachse | | |
| 14 | erstes Stützelement | | |
| 15 | erster Stirnendbereich | | |
| 16 | zweiter Stirnendbereich | | |
| 17 | zweites Stützelement | | |
| 18 | Koppelelement | | |
| 19 | Transportplattform | | |
| 20 | Distanzierungselement | | |
| 21 | erste Stützelementbasis | | |
| 22 | innerer Stützelementzinken | | |
| 23 | äußerer Stützelementzinken | | |
| 24 | erster Aufnahmeschlitz | | |
| 25 | zweite Stützelementbasis | | |
| 26 | innerer Stützelementzinken | | |
| 27 | äußerer Stützelementzinken | | |
| 28 | zweiter Aufnahmeschlitz | | |
| 29 | Steigungsausgleichselement | | |
| 30 | dritter Stirnendbereich | | |

## Patentansprüche

1. Verfahren zum Bereitstellen von Spulen (2, 3) an einem Bereitstellungsort, Transportieren der Spulen (2, 3) vom Bereitstellungsort zu einem Aufstellungsort und Aufstellen der Spulen (2, 3) zu einer Spulenbaugruppe (1) am Aufstellungsort, umfassend folgende Schritte:
- Bereitstellen der ersten Spule (2) mit zumindest einer ersten Wicklungslage (4), wobei die erste Spule (2) einen ersten Stirnendbereich (15) und einen in Richtung einer ersten Längsachse (8) davon beabstandeten zweiten Stirnendbereich (16) aufweist, und wobei zumindest einer der Stirnendbereiche (15, 16) offen ausgebildet ist und ein freier Kernbereich (6) von der ersten Spule (2) mit einer lichten Innenabmessung (10) mit einem Innendurchmesser ausgebildet ist,
- Bereitstellen zumindest einer zweiten Spule (3) mit zumindest einer zweiten Wicklungslage (7), wobei die zweite Spule (3) einen dritten Stirnendbereich (30) und einen in Richtung einer zweiten Längsachse (9) davon beabstandeten vierten Stirnendbereich (31) aufweist und die zweite Spule (3) mit einer Außenabmessung (11) mit einem Außendurchmesser ausgebildet wird, welche Außenabmessung (11) kleiner ist als die lichte Innenabmessung (10) der ersten Spule (2),
- Bereitstellen mehrerer erster Stützelemente (14) für die erste Spule (2) und/oder mehrerer zweiter Stützelemente (17) für die zumindest eine zweite Spule (3),
- Bereitstellen einer Transportplattform (19) für die Spulen (2, 3),
- Anordnen der ersten Stützelemente (14) und/oder der zweiten Stützelemente (17) vor dem Abstellen der Spulen (2, 3) auf der Transportplattform (19) an zumindest einer der Spulen (2, 3) an deren jeweiligen Stirnendbereich (15, 16; 30, 31), wobei zumindest eine der Spulen (2, 3) mittels zumindest drei der Stützelemente (14, 17) auf der Transportplattform (19) abstützbar ist,
- Anordnen einer der Spulen (2, 3) auf der Transportplattform (19) und Abstützen derselben auf der sich am Bereitstellungsort befindlichen Transportplattform (19) mit einer lotrechten Ausrichtung von deren Längsachse (8, 9),
- Anordnen der zumindest einen weiteren der Spulen (3, 2) auf der Transportplattform (19) und Abstützen derselben auf der sich am Bereitstellungsort befindlichen Transportplattform (19) und dabei jeweils die zumindest eine weitere der Spulen (3, 2) in einer in etwa koaxialen Lage bezüglich der bereits auf der Transportplattform (19) befindlichen Spule (2, 3) ausgerichtet wird, und die zumindest eine zweite kleinere Spule (3) mit ihrer geringen Außenabmessung innerhalb der ersten Spule (2) angeordnet ist, oder Anordnen der zumindest einen weiteren der Spulen (3, 2) innerhalb der bereits auf der Transportplattform (19) befindlichen Spule (2, 3) und Abstützen derselben auf dieser Spule (2, 3),
- Transportieren der auf der Transportplattform (19) auflagernden Spulen (2, 3) vom Bereitstellungsort zum Aufstellungsort,
- Entfernen der Spulen (2, 3) von der Transportplattform (19) und Aufbau von zumindest zwei der Spulen (2, 3) zur Spulenbaugruppe (1) auf einer eine horizontale Ausrichtung aufweisenden Aufstellfläche (12) und die erste Längsachse (8) der ersten Spule (2) und die zweite Längsachse (9) der zumindest einen zweiten Spule (3) lotrecht ausgerichtet werden.

2. Verfahren nach Anspruch 1, **dadurch gekennzeichnet, dass** die ersten Stützelemente (14) und die zweiten Stützelemente (17) in Umfangsrichtung um die Längsachsen (8, 9) gesehen zueinander versetzt angeordnet werden.

3. Verfahren nach Anspruch 1 oder 2, **dadurch gekennzeichnet, dass** die ersten Stützelemente (14) und/oder die zweiten Stützelemente (17) an der Transportplattform (19) feststehend gehalten werden, insbesondere daran befestigt werden.

4. Verfahren nach einem der vorhergehenden Ansprüche, **dadurch gekennzeichnet, dass** zumindest ein Distanzierungselement (20), bevorzugt mehrere Distanzierungselemente (20), bereitgestellt werden und das Distanzierungselement (20) oder die Distanzierungselemente (20) in radialer Richtung zwischen der ersten Spule (2) und der zumindest zweiten Spule (3) angeordnet werden.

5. Verfahren nach einem der Ansprüche 1 bis 4, **dadurch gekennzeichnet, dass** an einem vom ersten Stirnendbereich (15) in Axialrichtung beabstandeten zweiten Stirnendbereich (16) der ersten Spule (2) ebenfalls die ersten Stützelemente (14) angeordnet werden.

6. Verfahren nach einem der Ansprüche 1 bis 5, **dadurch gekennzeichnet, dass** der Aufbau der Spulen (2, 3) zur Spulenbaugruppe (1) in einer turmförmigen Anordnung der Spulen (2, 3) übereinander durchgeführt wird und dabei zuerst die erste Spule (2) am Aufstellungsort aufgebaut und deren erster Stirnendbereich (15) mittels der ersten Stützelemente (14) an der Aufstellfläche (12) abgestützt wird.

7. Verfahren nach einem der Ansprüche 1 bis 6, **dadurch gekennzeichnet, dass** die Stützelemente (14; 17) gabelförmig ausgebildet sind und jeweils eine Stützelementbasis (21; 25) sowie zumindest einen inneren Stützelementzinken (22, 26) und zumindest einen äußeren Stützelementzinken (23; 27) umfassen, wobei die Stützelementzinken (22, 23; 26, 27) jeweils von der Stützelementbasis (21; 25) aufragen und unter Ausbildung eines Aufnahmeschlitzes (24; 28) voneinander beabstandet angeordnet sind.

8. Verfahren nach Anspruch 7, **dadurch gekennzeichnet, dass** die ersten Stützelemente (14) derart an der zumindest einen ersten Wicklungslage (4) der ersten Spule (2) angeordnet werden, dass die zumindest eine erste Wicklungslage (4) im ersten Aufnahmeschlitz (24) aufgenommen wird und sich der zumindest eine innere Stützelementzinken (22) auf der der ersten Längsachse (8) zugewendeten Seite der zumindest einen ersten Wicklungslage (4) befindet und sich der zumindest eine äußere Stützelementzinken (23) auf der von der ersten Längsachse (8) abgewendeten Seite der zumindest einen ersten Wicklungslage (4) befindet und die erste Stützelementbasis (21) auf der Transportplattform (19) aufliegt.

9. Verfahren nach Anspruch 7, **dadurch gekennzeichnet, dass** die zweiten Stützelemente (17) derart an der zumindest einen zweiten Wicklungslage (7) der zweiten Spule (3) angeordnet werden, dass die zumindest eine zweite Wicklungslage (7) im zweiten Aufnahmeschlitz (28) aufgenommen wird und sich der zumindest eine innere Stützelementzinken (26) auf der der zweiten Längsachse (9) zugewendeten Seite der zumindest einen zweiten Wicklungslage (7) befindet und sich der zumindest eine äußere Stützelementzinken (27) auf der von der zweiten Längsachse (9) abgewendeten Seite der zumindest einen zweiten Wicklungslage (7) befindet und die zweite Stützelementbasis (25) auf der Transportplattform (19) aufliegt.

10. Verfahren nach einem der Ansprüche 5 bis 9, **dadurch gekennzeichnet, dass** die zweiten Stützelemente (17) in einer bezüglich der ersten Stützelemente (14) gleichen Teilung um die zweite Längsachse (9) angeordnet werden.

11. Verfahren nach einem der Ansprüche 5 bis 10, **dadurch gekennzeichnet, dass** an den ersten Stützelementen (14), welche sich im zweiten Stirnendbereich (16) der ersten Spule (2) befinden, jeweils ein Koppelelement (18) befestigt wird, wobei die Koppelelemente (18) in Richtung auf die erste Längsachse (8) ragend angeordnet werden

12. Verfahren nach einem der Ansprüche 1 bis 10, **dadurch gekennzeichnet, dass** an den zweiten Stützelementen (17) der zweiten Spule (3) jeweils ein Koppelelement (18) befestigt wird, wobei die Koppelelemente (18) auf die von der zweiten Längsachse (9) abgewendet Richtung vorragend angeordnet werden.

13. Verfahren nach Anspruch 11 oder 12, **dadurch gekennzeichnet, dass** die zweite Spule (3) mit den daran befindlichen zweiten Stützelementen (17) unter Zwischenschaltung der jeweiligen Koppelelemente (18) an den ersten Stützelementen (14) abstützend angeordnet wird und jedes der bislang noch nicht mit einem der Stützelemente (14, 17) verbundene Koppelelement (18) mit diesem verbunden wird.

14. Verfahren nach einem der Ansprüche 1 bis 13, **dadurch gekennzeichnet, dass** zumindest einzelne der ersten Stützelemente (14) mit der zumindest einen ersten Wicklungslage (4) der ersten Spule (2) feststehend verbunden werden und/oder zumindest einzelne der zweiten Stützelemente (17) mit der zumindest einen zweiten Wicklungslage (7) der zweiten Spule (3) feststehend verbunden werden.

15. Verfahren nach einem der Ansprüche 1 bis 14, **dadurch gekennzeichnet, dass** die zweite Längsachse (9) der zweiten Spule (3) fluchtend bezüglich der ersten Längsachse (8) der ersten Spule (2) angeordnet wird und die Längsachsen (8, 9) eine gemeinsame Längsmittelachse (13) definieren.

16. Verfahren nach einem der vorhergehenden Ansprüche, **dadurch gekennzeichnet, dass** für den Transport der Spulen (2, 3) und/oder beim Aufbau der Spulen (2, 3) zur Bildung der Spulenbaugruppe (1) zumindest zwischen einzelnen der ersten Stützelemente (14) und der zumindest einen ersten Wicklungslage (4) und/oder zumindest zwischen einzelnen der zweiten Stützelemente (17) und der zumindest einen zweiten Wicklungslage (7) jeweils Steigungsausgleichselemente (29) angeordnet oder ausgebildet werden.

## Claims

1. A method for supplying coils (2, 3) at a supply location, transporting the coils (2, 3) from the supply location to an installation location and installing the coils (2, 3) at the installation location to form a coil assembly (1), comprising the following steps:
- providing the first coil (2) having at least one first winding layer (4), wherein the first coil (2) has a first face end region (15) and a second face end region (16) spaced apart therefrom in the direction of a first longitudinal axis (8), and wherein at least one of the face end regions (15, 16) is open, and a free core region (6) of the first coil (2) has a clear inner dimension (10) having an inner diameter,
- providing at least one second coil (3) having at least one second winding layer (7), wherein the second coil (3) has a third face end region (30) and a fourth face end region (31) spaced apart therefrom in the direction of a second longitudinal axis (9), and the second coil (3) has an outer dimension (11) having an outer diameter, which outer dimension (11) is smaller than the clear inner dimension (10) of the first coil (2),
- providing multiple first support elements (14) for the first coil (2) and/or multiple second support elements (17) for the at least one second coil (3),
- providing a transport platform (19) for the coils (2, 3),
- arranging the first support elements (14) and/or the second support elements (17), prior to placing the coils (2, 3) on the transport platform (19), at at least one of the coils (2, 3) at its respective face end region (15, 16; 30, 31), wherein at least one of the coils (2, 3) may be supported on the transport platform (19) by means of at least three of the support elements (14, 17),
- arranging one of the coils (2, 3) on the transport platform (19) and supporting it on the transport platform (19) located at the supply location with a perpendicular orientation of its longitudinal axis (8, 9),
- arranging the at least one other of the coils (3, 2) on the transport platform (19) and supporting it on the transport platform (19) located at the supply location and in this process aligning the respective at least one other of the coils (3, 2) approximately coaxially with respect to the coil (2, 3) already located on the transport platform (19), and the at least one second, smaller coil (3) with its small outer dimension being arranged within the first coil (2), or arranging the at least one other of the coils (3, 2) within the coil (2, 3) already located on the transport platform (19) and supporting it on said coil (2, 3),
- transporting the coils (2, 3) resting on the transport platform (19) from the supply location to the installation location,
- removing the coils (2, 3) from the transport platform (19) and assembling at least two of the coils (2, 3) to form a coil assembly (1) on an installation surface (12) having a horizontal orientation and perpendicularly aligning the first longitudinal axis (8) of the first coil (2) and the second longitudinal axis (9) of the at least one second coil (3).

2. The method according to claim 1, **characterized in that** the first support elements (14) and the second support elements (17) are arranged offset relative to one another in the circumferential direction around the longitudinal axes (8, 9).

3. The method according to claim 1 or 2, **characterized in that** the first support elements (14) and/or the second support elements (17) are held at the transport platform (19) in a stationary manner, in particular attached thereto.

4. The method according to one of the preceding claims, **characterized in that** at least one spacer element (20), preferably multiple spacer elements (20) are provided, and the spacer element (20) or spacer elements (20) are arranged in the radial direction between the first coil (2) and the at least one second coil (3).

5. The method according to one of claims 1 to 4, **characterized in that** the first support elements (14) are also arranged at a second face end region (16) of the first coil (2) spaced apart from the first face end region (15) in the axial direction.

6. The method according to one of claims 1 to 5, **characterized in that** the coils (2, 3) are assembled to form a coil assembly (1) by arranging the coils (2, 3) in a tower-like manner on top of one another, and the first coil (2) is assembled first at the installation location, and its first face end region (15) is supported on the installation surface (12) by means of the first support elements (14).

7. The method according to one of claims 1 to 6, **characterized in that** the support elements (14; 17) are fork-shaped and each comprise a support element basis (21; 25) and at least one inner support element prong (22; 26) and at least one outer support element prong (23; 27), wherein the support element prongs (22, 23; 26, 27) each project upward from the support element basis (21; 25) and are spaced apart from one another, thereby forming a receiving slot (24; 28).

8. The method according to claim 7, **characterized in that** the first support elements (14) are arranged at the at least one first winding layer (4) of the first coil (2) such that the at least one first winding layer (4) is received in the first receiving slot (24), and the at least one inner support element prong (22) is located on the side of the at least one first winding layer (4) facing the first longitudinal axis (8), and the at least one outer support element prong (23) is located on the side of the at least one first winding layer (4) facing away from the first longitudinal axis (8), and the first support element basis (21) rests on the transport platform (19).

9. The method according to claim 7, **characterized in that** the second support elements (17) are arranged at the at least one second winding layer (7) of the second coil (3) such that the at least one second winding layer (7) is received in the second receiving slot (28), and the at least one inner support element prong (26) is located on the side of the at least one second winding layer (7) facing the second longitudinal axis (9), and the at least one outer support element prong (27) is located on the side of the at least one second winding layer (7) facing away from the second longitudinal axis (9), and the second support element basis (25) rests on the transport platform (19).

10. The method according to one of claims 5 to 9, characterized the second support elements (17) are arranged around the second longitudinal axis (9) at equal spacing relative to the first support elements (14).

11. The method according to one of claims 5 to 10, **characterized in that** a coupling element (18) is attached to each of the first support elements (14) located in the second face end region (16) of the first coil (2), wherein the coupling elements (18) are arranged projecting in the direction of the first longitudinal axis (8).

12. The method according to one of claims 1 to 10, **characterized in that** a coupling element (18) is attached to each of the second support elements (17) of the second coil (3), wherein the coupling elements (18) are arranged projecting forward in the direction facing away from the second longitudinal axis (9).

13. The method according to claim 11 or 12, **characterized in that** the second coil (3) with the second support elements (17) located thereat is supportingly arranged at the first support elements (14) with interposing the respective coupling elements (18), and each of the coupling elements (18) that has not yet been connected to one of the support elements (14, 17) is connected thereto.

14. The method according to one of claims 1 to 13, **characterized in that** at least individual ones of the first support elements (14) are connected in a stationary manner to the at least one first winding layer (4) of the first coil (2) and/or at least individual ones of the second support elements (17) are connected in a stationary manner with the at one second winding layer (7) of the second coil (3).

15. The method according to one of claims 1 to 14, **characterized in that** the second longitudinal axis (9) of the second coil (3) is aligned with respect to the first longitudinal axis (8) of the first coil (2), and the longitudinal axes (8, 9) define a joint longitudinal central axis (13).

16. The method according to one of the preceding claims, **characterized in that** for transporting the coils (2, 3) and/or when assembling the coils (2, 3) to form the coil assembly (1), pitch compensation elements (29) are arranged or formed at least between individual ones of the first support elements (14) and the at least one first winding layer (4) and/or at least between individual ones of the second support elements (17) and the at least one second winding layer (7).

## Revendications

1. Procédé de production de bobines (2, 3) au niveau d'un lieu de production, de transport des bobines (2, 3) du lieu de production vers un lieu de mise en place et mise en place des bobines (2, 3) en un ensemble de bobines (1) au niveau du lieu de mise en place, comprenant les étapes suivantes :
- production de la première bobine (2) avec au moins une première couche d'enroulement (4), dans lequel la première bobine (2) comprend une première partie d'extrémité frontale (15) et une deuxième partie d'extrémité frontale (16) distante de celle-ci dans la direction d'un premier axe longitudinal (8) et dans lequel au moins une des parties d'extrémité frontale (15, 16) est conçue de manière ouverte et une partie de noyau (6) est réalisée à partir de la première bobine (2) avec une dimension intérieure (10) avec un diamètre intérieur,
- production d'au moins une deuxième bobine (3) avec au moins une deuxième couche d'enroulement (7), dans lequel la deuxième bobine (3) comprend une troisième partie d'extrémité frontale (30) et une quatrième partie d'extrémité frontale (31), distante de celle-ci dans la direction d'un deuxième axe longitudinal (9) et la deuxième bobine (3) est réalisée avec une dimension extérieure (11) avec un diamètre extérieur, la dimension extérieure (11) étant inférieure à la dimension intérieure (10) de la première bobine (2),
- production de plusieurs premiers éléments d'appui (14) pour la première bobine (2) et/ou de plusieurs deuxièmes éléments d'appui (17)pour l'au moins une deuxième bobine (3),
- production d'une plate-forme de transport (19) pour les bobines (2, 3),
- disposition des premiers éléments d'appui (14) et/ou des deuxièmes éléments d'appui (17) avant la pose des bobines (2, 3) sur la plate-forme de transport (19) au niveau d'au moins une des bobines (2, 3), sur sa partie d'extrémité frontale (15, 16 ; 30, 31) respective, dans lequel au moins une des bobines (2, 3) peut être appuyée, au moyen d'au moins trois des éléments d'appui (14, 17), sur la plate-forme de transport (19),
- disposition d'une des bobines (2, 3) sur la plate-forme de transport (19) et appui de celle-ci sur la plate-forme de transport (19) se trouvant au niveau du lieu de production avec une orientation perpendiculaire par rapport à son axe longitudinal (8, 9),
- disposition d'au moins une autre des bobines (3, 2) sur la plate-forme de transport (19) et appui de celle-ci sur la plate-forme de transport (19) se trouvant au niveau du lieu de production et l'au moins une autre des bobines (3, 2) est orientée dans une position approximativement coaxiale par rapport à la bobine (2, 3) se trouvant déjà sur la plate-forme de transport (19) et l'au moins une deuxième bobines (3), plus petite, est disposée, avec sa faible dimension extérieure, à l'intérieur de la première bobine (2) ou disposition de l'au moins une autre des bobines (3, 2) à l'intérieur de la bobine (2, 3) se trouvant déjà sur la plate-forme de transport (19) et appui de celle-ci sur cette bobine (2, 3),
- transport des bobines (2, 3) stockées sur la plate-forme (19) du lieu de production vers le lieu de mise en place,
- retrait des bobines (2, 3) de la plate-forme de transport (19) et assemblage d'au moins deux des bobines (2, 3) en un ensemble de bobines (1) sur une surface de mise en place (12) présentant une orientation horizontale et le premier axe longitudinal (8) de la première bobine (2) et le deuxième axe longitudinal (9) de l'au moins une deuxième bobine (3) sont orientés de manière perpendiculaire.

2. Procédé selon la revendication 1, **caractérisé en ce que** les premiers éléments d'appui (14) et les deuxièmes éléments d'appui (17) sont disposés de manière décalée entre eux, vus dans la direction de la circonférence autour des axes longitudinaux (8, 9).

3. Procédé selon la revendication 1 ou 2, **caractérisé en ce qu** les premiers éléments d'appui (14) et/ou les deuxièmes éléments d'appui (17) sont maintenus de manière fixe sur la plate-forme (19), plus particulièrement ils y sont fixés.

4. Procédé selon l'une des revendications précédentes, **caractérisé en ce qu'**au moins un élément d'écartement (20), de préférence plusieurs éléments d'écartement (20), sont mis à disposition et l'élément d'écartement (20) ou les éléments d'écartement (20) sont disposés dans la direction radiale entre la première bobine (2) et l'au moins une deuxième bobine (3).

5. Procédé selon l'une des revendications 1 à 4, **caractérisé en ce que** les premiers éléments d'appui (14) sont également disposés au niveau d'une deuxième partie d'extrémité frontale (16) de la première bobine (2), distante, dans la direction axiale, de la première partie d'extrémité frontale (15).

6. Procédé selon l'une des revendications 1 à 5, **caractérisé en ce que** l'assemblage des bobines (2, 3) en un ensemble de bobines (1) est effectué dans une disposition en forme de tour des bobines (2, 3) l'une sur l'autre et la première bobine (2) est d'abord installée sur le lieu de mise en place et sa première partie d'extrémité frontale (15) est appuyée contre la surface de mise en place (12) au moyen des premiers éléments d'appui (14).

7. Procédé selon l'une des revendications 1 à 6, **caractérisé en ce que** les éléments d'appui (14 ; 17) présentent une forme de fourche et comprennent respectivement une base d'élément d'appui (21 ; 25) ainsi qu'au moins une dent d'élément d'appui interne (22, 26) et au moins une dent d'élément d'appui externe (23 ; 27), dans lequel les dents d'élément d'appui (23, 23 ; 26, 27) dépassent respectivement de la base d'élément d'appui (21 ; 25) et sont disposées de manière distante entre elles en formant une fente de logement (24 ; 28).

8. Procédé selon la revendication 7, **caractérisé en ce que** les premiers éléments d'appui (14) sont disposés au niveau d'au moins une première couche d'enroulement (4) de la première bobine (2) de façon à ce que l'au moins une première couche d'enroulement (4) soit logée dans la première fente de logement (24) et à ce que l'au moins une dent d'élément d'appui interne (22) se trouve sur le côté de l'au moins une première couche d'enroulement (4) orienté vers le premier axe longitudinal (8) et à ce que l'au moins une dent d'élément d'appui externe (23) se trouve sur le côté de l'au moins une première couche d'enroulement (4) opposé au premier axe longitudinal (8) et à ce que la première base d'élément d'appui (21) repose sur la plate-forme de transport (19).

9. Procédé selon la revendication 7, **caractérisé en ce que** les deuxièmes éléments d'appui (17) sont disposés au niveau d'au moins une deuxième couche d'enroulement (7) de la deuxième bobine (3) de façon à ce que l'au moins une deuxième couche d'enroulement (7) soit logée dans la deuxième fente de logement (28) et à ce que l'au moins une dent d'élément d'appui interne (26) se trouve sur le côté de l'au moins une deuxième couche d'enroulement (7) orienté vers le deuxième axe longitudinal (9) et à ce que l'au moins une dent d'élément d'appui externe (27) se trouve sur le côté de l'au moins une deuxième couche d'enroulement (7) opposé au deuxième axe longitudinal (9) et à ce que la deuxième base d'élément d'appui (25) repose sur la plate-forme de transport (19).

10. Procédé selon l'une des revendications 5 à 9, **caractérisé en ce que** les deuxièmes éléments d'appui (17) sont disposés avec un pas égal à celui des premiers éléments d'appui (14) autour du deuxième axe longitudinal (9).

11. Procédé selon l'une des revendications 5 à 10, **caractérisé en ce que**, au niveau des premiers éléments d'appui (14), qui se trouvent dans la deuxième partie d'extrémité frontale (16) de la première bobine (2), est fixé respectivement un élément de couplage (18), dans lequel les éléments de couplage (18) sont disposés de façon à dépasser dans la direction du premier axe longitudinal (8).

12. Procédé selon l'une des revendications 1 à 10, **caractérisé en ce que**, au niveau des deuxièmes éléments d'appui (17) de la deuxième bobine (3), est fixé respectivement un élément de couplage (18), dans lequel les éléments de couplage (18) sont disposés de façon à dépasser dans la direction opposée au deuxième axe longitudinal (9).

13. Procédé selon la revendication 11 ou 12, **caractérisé en ce que** la deuxième bobine (3) avec les deuxièmes éléments d'appui (17) qui s'y trouvent, est disposée de façon à s'appuyer contre les premiers éléments d'appui (14) avec l'interposition des éléments de couplage (18) respectifs et chacun des éléments de couplage (18) non encore relié avec un des éléments d'appui (14, 17) est relié avec celui-ci.

14. Procédé selon l'une des revendications 1 à 13, **caractérisé en ce qu'**au moins certains des premiers éléments d'appui (14) sont reliés de manière fixe avec l'au moins une première couche d'enroulement (4) de la première bobine (2) et/ou au moins certains des deuxièmes éléments d'appui (17) sont reliés de manière fixe avec l'au moins une deuxième couche d'enroulement (7) de la deuxième bobine (3).

15. Procédé selon l'une des revendications 1 à 14, **caractérisé en ce que** le deuxième axe longitudinal (9) de la deuxième bobine (3) est disposé de manière alignée par rapport au premier axe longitudinal (8) de la première bobine (2) et les axes longitudinaux (8, 9) définissent un axe central commun (13).

16. Procédé selon l'une des revendications précédentes, **caractérisé en ce que**, pour le transport des bobines (2, 3) et/ou lors de l'assemblage des bobines (2, 3) afin de former l'ensemble de bobines (1), au moins entre certains des premiers éléments d'appui (14) et l'au moins une première couche d'enroulement (4) et/ou au moins entre certains des deuxièmes éléments d'appui (17) et l'au moins une deuxième couche d'enroulement (7), sont disposés ou réalisés respectivement des éléments de compensation d'inclinaison (29).
